# EUROPÄISCHE PATENTANMELDUNG

(11) **EP 1 860 334 A1**
(43) Veröffentlichungstag der Anmeldung: **28.11.2007**
(21) Anmeldenummer: 06405222.8
(22) Anmeldetag: 23.05.2006
(51) Int. Cl.: F16B 37/14, F16B 5/02

(54) **Federsenkmutter sowie elektrische Verschienung mit einer solchen Federsenkmutter**

(71) Anmelder: ABB Schweiz AG, 5400 Baden (CH)
(72) Erfinder: Keller, Thomas, 5070 Frick (CH); Bolgiani, Fabio, 6500 Bellinzona (CH); Sacher, Robert, 5242 Birr (CH)
(74) Vertreter: ABB Patent Attorneys

(57) **Zusammenfassung**

Es wird eine Federsenkmutter mit einem zylinderförmigen und mit polygonalem Querschnitt ausgebildeten Kantenelement (1) angegeben, welches ein von einer ersten Stirnseite (2) des Kantenelementes (1) zu einer zweiten Stirnseite (3) des Kantenelementes (1) verlaufendes durchgehendes Loch (4) aufweist. Zur einfachen und schnellen Montage und zur Einsparung von Platz im montierten Zustand wenig Platz beansprucht und einfach und schnell montiert werden ist ein Scheibenelement (5) vorgesehen, welches mit einer ersten Stirnseite (6) an der ersten Stirnseite (2) des Kantenelementes (1) angeordnet ist, wobei das Scheibenelement (5) an der ersten Stirnseite des Kantenelementes übersteht. Ferner wird eine elektrische Verschienung mit einer solchen Federsenkmutter angegeben.

## Beschreibung

### Technisches Gebiet

Die Erfindung bezieht sich auf das Gebiet der Befestigungstechnik. Sie geht aus von einer Federsenkmutter sowie von einer elektrischen Verschienung mit einer solchen Federsenkmutter gemäss den Oberbegriffen der unabhängigen Ansprüche.

### Stand der Technik

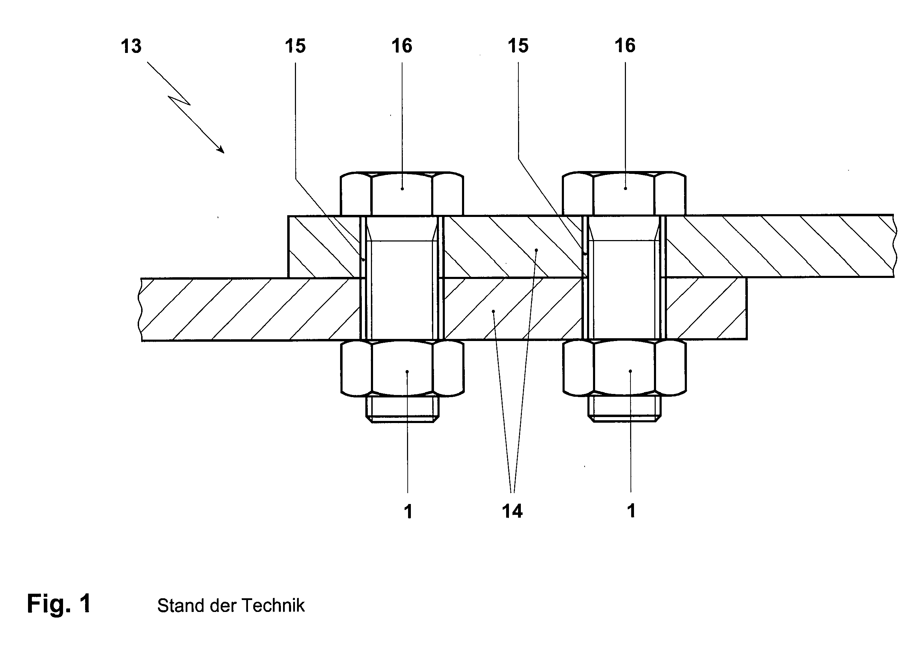

Elektrische Verschienungen, insbesondere in leistungselektronischen Anwendungen wie Umrichtern, umfassen gängigerweise einen Stapel aus mindestens zwei sich zumindest teilweise überdeckenden Verschienungsplatten, wobei der Stapel mindestens ein in Stapelrichtung verlaufendes durchgehendes, insbesondere kreisförmiges, Loch aufweist und durch das mindestens eine durchgehende Loch des Stapels eine Schraube geführt ist, insbesondere wie in einer Ausführungsform nach dem Stand der Technik gemäss Fig. 1 gezeigt. Auf das Schraubenende ist üblicherweise eine gängige Mutter aufgedreht, so dass die Verschienungsplatten in ihrem Überdeckungsbereich gegeneinander gepresst werden. Die Mutter umfasst typischerweise ein zylinderförmiges und mit polygonalem Querschnitt ausgebildetes Kantenelement, welches ein von einer ersten Stirnseite des Kantenelementes zu einer zweiten Stirnseite des Kantenelementes verlaufendes durchgehendes Loch aufweist, wobei das Loch des Kantenelementes ein Innengewinde aufweist, welches insbesondere zu der vorstehend genannten Schraube passt.

Problematisch bei einer elektrischen Verschienung nach dem Stand der Technik gemäss Fig. 1 ist, dass die Mutter aufgrund ihre Bauhöhe deutlich über den Stapel der Verschienungsplatten hinausragt und demnach sehr viel Platz beansprucht. Zudem muss jeweils eine lange Schraube verwendet werden, damit die Mutter überhaupt ausreichend angezogen werden kann, wodurch ein erhöhter Materialaufwand notwendig ist und sich das Gewicht erhöht. Ferner muss die jeweilige Mutter bei der Montage bis zum Aufdrehen auf das Schraubenende festgehalten werden und bei der Aufdrehung auf das Schraubenende zusätzlich bezüglich Verdrehung, beispielsweise durch Gegenhalten mittels eines Werkzeugs, gesichert werden, wodurch sich ein erheblicher Montageaufwand, Personalaufwand und Zeitaufwand ergibt.

### Darstellung der Erfindung

Aufgabe der Erfindung ist es deshalb, eine Mutter, insbesondere eine Federsenkmutter, anzugeben, welche im montierten Zustand wenig Platz beansprucht und einfach und schnell montiert werden kann. Ferner ist es eine Aufgabe der Erfindung, eine elektrische Verschienung mit einer solchen Federsenkmutter bereitzustellen, welche wenig Platz benötigt, einen geringen Materialaufwand und ein geringes Gewicht aufweist und einfach und schnell realisiert werden kann. Diese Aufgaben werden durch die Merkmale der unabhängigen Ansprüche gelöst. In den abhängigen Ansprüchen sind vorteilhafte Weiterbildungen der Erfindung angegeben.

Die erfindungsgemässe Federsenkmutter umfasst ein zylinderförmiges und mit polygonalem Querschnitt ausgebildetes Kantenelement, welches ein von einer ersten Stirnseite des Kantenelementes zu einer zweiten Stirnseite des Kantenelementes verlaufendes durchgehendes Loch aufweist. Nach der Erfindung ist ein Scheibenelement vorgesehen, welches mit einer ersten Stirnseite an der ersten Stirnseite des Kantenelementes angeordnet ist, wobei das Scheibenelement an der ersten Stirnseite des Kantenelementes übersteht. Ferner umfasst die erfindungsgemässe elektrische Verschienung einen Stapel aus mindestens zwei sich zumindest teilweise überdeckenden Verschienungsplatten, wobei der Stapel mindestens ein in Stapelrichtung verlaufendes durchgehendes Loch aufweist und durch das mindestens eine durchgehende Loch des Stapels eine Schraube geführt ist. Erfindungsgemäss ist das Schraubenende der Schraube zur Verspannung des Stapels nun in die vorstehend genannte Federsenkmutter nach der Erfindung eingedreht, wobei das Kantenelement in das durchgehende Loch des Stapels hineinragt. Damit beansprucht die erfindungsgemässe Federsenkmutter im montierten Zustand vorteilhaft nur sehr wenig Platz. Ferner kann die Montage der Federsenkmutter mit Vorteil sehr einfach und schnell erfolgen, da diese beispielsweise bei einer elektrischen Verschienung lediglich mit dem Katenelement in das durchgehende Loch des Stapels der Verschienungsplatten eingelegt werden muss und danach nur noch die Schraube in das durchgehende Loch des Stapels geführt und das Schraubenende in die Federsenkmutter eingedreht werden muss. Das Scheibenelement der Federsenkmutter verhindert mit Vorteil ein Durchrutschen des Kantenelementes und damit der ganzen Federsenkmutter durch das durchgehende Loch des Stapels bei der Montage und dient ferner der Aufnahme der Stapelpresskräfte beim Festziehen der Schraube. Mittels der bei der erfindungsgemässen elektrischen Verschienung verwendeten erfindungsgemässen Federsenkmutter kann die elektrische Verschienung besonders kompakt und platzsparend realisiert werden, da das Kantenelement in das durchgehende Loch des Stapels der Verschienungsplatten hineinragt und lediglich das Scheibenelement über den Stapel übersteht. Die erfindungsgemässe elektrische Verschienung ist damit besonders für leistungselektronische Anwendungen, beispielsweise für Traktionsanwendungen, interessant, bei welchen normalerweise sehr eingeschränkte Platzverhältnisse vorherrschen. Dadurch, dass das Kantenelement in das durchgehende Loch des Stapels der Verschienungsplatten hineinragt, können weiterhin kürzere Schrauben verwendet werden, wodurch vorteilhaft Material eingespart werden kann und woraus ein geringeres Gewicht der elektrischen Verschienung folgt. Darüber hinaus kann die Montage der erfindungsgemässen elektrischen Verschienung vorteilhaft besonders einfach und schnell erfolgen, da, wie bereits vorstehend erwähnt, die erfindungsgemässe Federsenkmutter lediglich mit dem Katenelement in das durchgehende Loch des Stapels der Verschienungsplatten eingelegt werden muss und danach nur noch die Schraube in das durchgehende Loch des Stapels geführt und das Schraubenende in die Federsenkmutter eingedreht werden muss, wobei das Scheibenelement der Federsenkmutter mit Vorteil ein Durchrutschen des Kantenelementes und damit der ganzen Federsenkmutter durch das durchgehende Loch des Stapels bei der Montage verhindert.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

### Kurze Beschreibung der Zeichnungen

Es zeigen:
- Fig. 1: eine Ausführungsform einer elektrischen Verschienung nach dem Stand der Technik,
- Fig. 2a: eine erste Ausführungsform der erfindungsgemässen Federsenkmutter in einer Aufsicht,
- Fig. 2b: die erste Ausführungsform der erfindungsgemässen Federsenkmutter in einer Seitenansicht,
- Fig. 2c: die erste Ausführungsform der erfindungsgemässen Federsenkmutter in einer räumlichen Ansicht,
- Fig. 3a: eine zweite Ausführungsform der erfindungsgemässen Federsenkmutter in einer Aufsicht,
- Fig. 3b: die zweite Ausführungsform der erfindungsgemässen Federsenkmutter in einer Seitenansicht,
- Fig. 3c: die zweite Ausführungsform der erfindungsgemässen Federsenkmutter in einer räumlichen Ansicht,
- Fig. 4a: eine erste Ausführungsform einer Verschienungsplatte einer erfindungsgemässen elektrischen Verschienung in einer Aufsicht,
- Fig. 4b: eine erste Ausführungsform einer erfindungsgemässen elektrischen Verschienung, insbesondere mit einer Verschienungsplatte nach Fig. 4a, in einer Seitenansicht,
- Fig. 5a: eine zweite Ausführungsform einer Verschienungsplatte einer erfindungsgemässen elektrischen Verschienung in einer Aufsicht,
- Fig. 5b: eine zweite Ausführungsform einer erfindungsgemässen elektrischen Verschienung, insbesondere mit einer Verschienungsplatte nach Fig. 5a, in einer Seitenansicht und
- Fig. 6: eine dritte Ausführungsform einer erfindungsgemässen elektrischen Verschienung.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

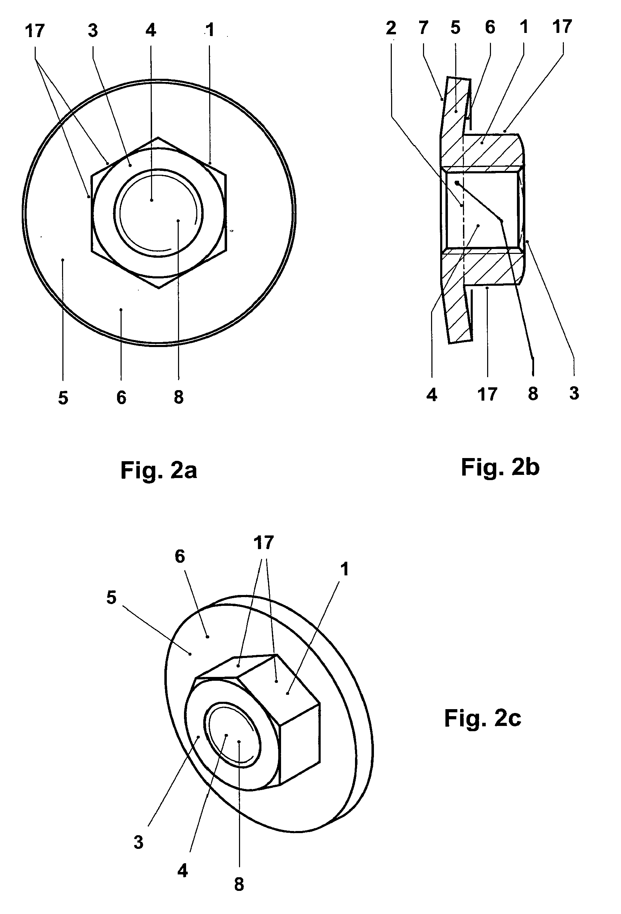

In Fig. 2a ist eine erste Ausführungsform der erfindungsgemässen Federsenkmutter in einer Aufsicht, in Fig. 2b in einer Seitenansicht und in Fig. 2c in einer räumlichen Ansicht dargestellt. Gemäss dieser ersten Ausführungsform umfasst die Federsenkmutter ein zylinderförmiges und mit polygonalem Querschnitt ausgebildetes Kantenelement 1, welches ein von einer ersten Stirnseite 2 des Kantenelementes 1 zu einer zweiten Stirnseite 3 des Kantenelementes 1 verlaufendes durchgehendes Loch 4 aufweist. Erfindungsgemäss ist ein Scheibenelement 5 vorgesehen, welches mit einer ersten Stirnseite 6 an der ersten Stirnseite 2 des Kantenelementes 1 angeordnet ist, wobei das Scheibenelement 5 an der ersten Stirnseite 2 des Kantenelementes 1 übersteht und diese damit überragt. Vorzugsweise weist der polygonale Querschnitt des Kantenelementes 1 mindestens drei Ecken auf.

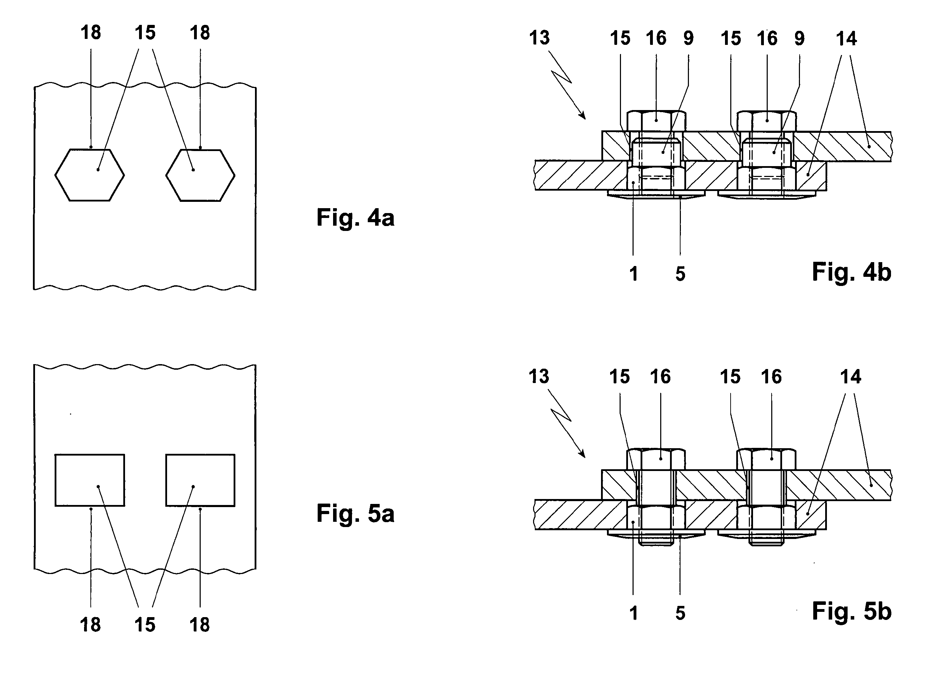

In Fig. 4b ist zudem eine erste Ausführungsform und in Fig. 5b eine zweite Ausführungsform einer erfindungsgemässen elektrischen Verschienung jeweils in einer Seitenansicht gezeigt. Die erfindungsgemässe elektrische Verschienung umfasst einen Stapel 13 aus mindestens zwei sich zumindest teilweise überdeckenden Verschienungsplatten 14, wobei der Stapel 13 mindestens ein in Stapelrichtung verlaufendes durchgehendes Loch 15 aufweist und durch das mindestens eine durchgehende Loch 15 des Stapels 13 eine Schraube 16 geführt ist. Erfindungsgemäss ist das Schraubenende der Schraube 16 zur Verspannung des Stapels 13 nun in die vorstehend anhand von Fig. 2a, Fig. 2b und Fig. 2c bereits beispielhaft beschriebene Federsenkmutter nach der Erfindung eingedreht, wobei das Kantenelement 1 in das durchgehende Loch 15 des Stapels hineinragt. Damit benötigt die erfindungsgemässe Federsenkmutter im montierten Zustand vorteilhaft nur ein Minimum an Platz. Ferner kann die Montage der Federsenkmutter mit Vorteil sehr einfach und schnell erfolgen, da diese beispielsweise bei einer elektrischen Verschienung lediglich mit dem Katenelement 1 in das durchgehende Loch 15 des Stapels 13 der Verschienungsplatten 14 eingelegt werden muss und danach nur noch die Schraube 16 in das durchgehende Loch 15 des Stapels 13 geführt und das Schraubenende in die Federsenkmutter eingedreht werden muss. Das Scheibenelement 5 der Federsenkmutter verhindert vorteilhaft ein Durchrutschen des Kantenelementes 1 und damit der ganzen Federsenkmutter durch das durchgehende Loch 15 des Stapels 13 bei der Montage und dient ferner der Aufnahme der Stapelpresskräfte beim Festziehen der Schraube16.

Mittels der bei der erfindungsgemässen elektrischen Verschienung, welche vorstehend anhand von Fig. 4b und Fig. 5b beschrieben wurde, verwendeten erfindungsgemässen Federsenkmutter kann die elektrische Verschienung besonders kompakt und platzsparend realisiert werden, da das Kantenelement 1 in das durchgehende Loch 15 des Stapels 13 der Verschienungsplatten 14 hineinragt und lediglich das Scheibenelement 5 über den Stapel 13 , insbesondere bezüglich der Stapelrichtung, übersteht. Dadurch, dass das Kantenelement 1 in das durchgehende Loch 15 des Stapels 13 der Verschienungsplatten 14 hineinragt, können weiterhin kürzere Schrauben 16 verwendet werden, wodurch vorteilhaft Material eingespart werden kann und woraus ein geringeres Gewicht der elektrischen Verschienung insgesamt resultiert. Darüber hinaus kann die Montage der erfindungsgemässen elektrischen Verschienung vorteilhaft besonders einfach und schnell erfolgen, da, wie bereits vorstehend erwähnt, die erfindungsgemässe Federsenkmutter lediglich mit dem Katenelement 1 in das durchgehende Loch 15 des Stapels 13 der Verschienungsplatten 14 eingelegt werden muss und danach nur noch die Schraube 16 in das durchgehende Loch 15 des Stapels 13 geführt und das Schraubenende in die Federsenkmutter eingedreht werden muss, wobei das Scheibenelement 5 der Federsenkmutter mit Vorteil ein Durchrutschen des Kantenelementes 1 und damit der ganzen Federsenkmutter durch das durchgehende Loch 15 des Stapels 13 bei der Montage verhindert.

Gemäss Fig. 2b ist der bezüglich der ersten Stirnseite 2 des Kantenelementes 1 überstehende Teil des Scheibenelementes 5 vorzugsweise in Richtung des Kantenelementes 1, d.h. in Richtung der Zylindererstreckungsrichtung des Kantenelementes 1, gebogen. Bei der Montage der Federsenkmutter, beispielsweise für die erfindungsgemässe elektrischen Verschienung, insbesondere nach Fig. 4b bzw. Fig. 5b, kann dadurch beim Festziehen der Schraube 16 eine Spannkraft auf den sich auf den Stapel 13 abstützenden Teil des Schraubenkopfes der Schraube 16 erzeugt werden, welche die Schraube 16 gegen ungewolltes Verdrehen, Aufdrehen und Lösen sichert. Das Scheibenelement 5 mit der erwähnten Biegung stellt somit eine äusserst einfache und effiziente Schraubensicherung für die Schraube 16 dar. Zudem wird durch das Scheibenelement 5 mit der erwähnten Biegung eine Vorspannkraft im Stapel 13 erzeugt, welche den Stapel 13 bei sich ändernden Betriebsbedingungen, beispielsweise bei Materialausdehnungen infolge von Temperaturunterschieden, sicher zusammenhält.

Vorzugsweise weist das Scheibenelement 5 gemäss Fig. 2a, Fig. 2b und Fig. 2c ein von der ersten Stirnseite 6 des Scheibenelementes 5 zu einer zweiten Stirnseite 7 des Scheibenelementes 5 verlaufendes durchgehendes Loch 8 auf, wobei das Loch 8 des Scheibenelementes 5 fluchtend zu dem Loch 4 des Kantenelementes 1 angeordnet, so dass damit ein durchgehendes Loch durch die gesamte Federsenkmutter gebildet ist. Falls z.B. nur längere Schrauben, d.h. wesentlich grösser als die Stapelhöhe des Stapels 13, bei der Montage verfügbar sind, können auch solche Schrauben verwendet werden, welche dann im montierten Zustand über das Loch 8 des Scheibenelementes 5 hinausragen. In diesem Zusammenhang sei erwähnt, dass das Scheibenelement 5 nicht notwendigerweise ein von der ersten Stirnseite 6 des Scheibenelementes 5 zur zweiten Stirnseite 7 des Scheibenelementes 5 verlaufendes durchgehendes Loch 8 aufweisen muss, sondern auch ohne Loch, d.h. insbesondere als Vollmaterial ausgebildetes Scheibenelement 5, ausgeführt sein kann.

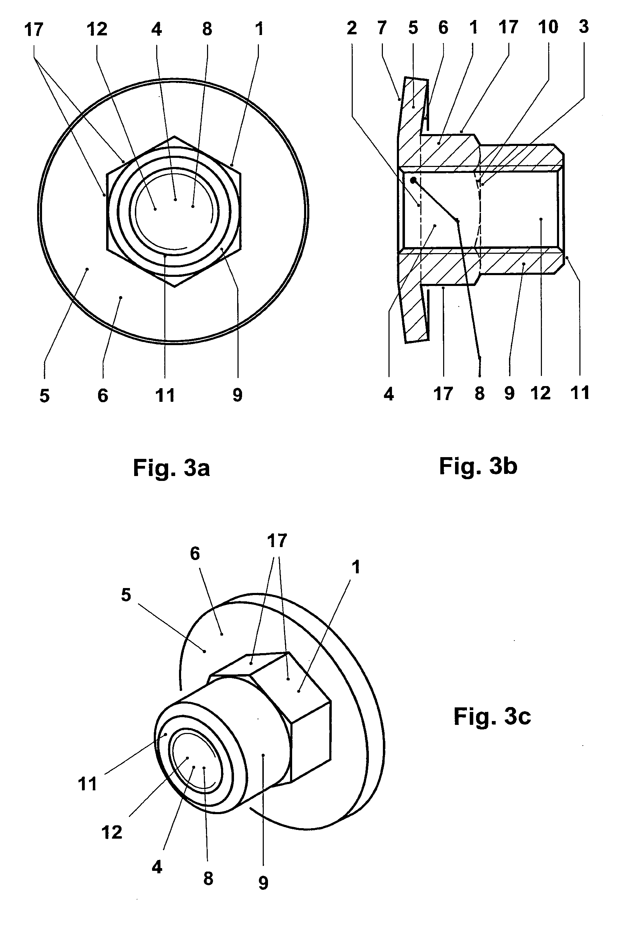

In Fig. 3a ist eine zweite Ausführungsform der erfindungsgemässen Federsenkmutter in einer Aufsicht, in Fig. 3b in einer Seitenansicht und in Fig. 3c in einer räumlichen Ansicht gezeigt. Die darin dargestellte Federsenkmutter umfasst im Unterschied zu Fig. 2a, Fig. 2b und Fig. 2c ein zylinderförmiges und mit kreisförmigem Querschnitt ausgebildetes Verlängerungselement 9, welches mit einer ersten Stirnseite 10 an der zweiten Stirnseite 3 des Kantenelementes 1 angeordnet ist, wobei der kreisförmige Querschnitt des Verlängerungselementes 9 dem polygonalen Querschnitt des Kantenelementes 1 einbeschrieben ist. Zudem weist das Verlängerungselement 9 ein von der ersten Stirnseite 10 des Verlängerungselementes 9 zu einer zweiten Stirnseite 11 des Verlängerungselementes 9 verlaufendes durchgehendes Loch 12 auf, wobei das Loch 12 des Verlängerungselementes 9 fluchtend zu dem Loch 4 des Kantenelementes 1 angeordnet. Vorteilhaft dient das Verlängerungselement 9 der verbesserten Führung der Federsenkmutter bei deren Montage beispielsweise bei einer elektrischen Verschienung, insbesondere beim Einlegen in das durchgehende Loch 15 des Stapels 13 der Verschienungsplatten 14. Fig. 5b zeigt dazu die bereits erwähnte zweite Ausführungsform der erfindungsgemässen elektrischen Verschienung in einer Seitenansicht mit Federsenkmuttern nach Fig. 3a, Fig. 3b bzw. Fig. 3c. Ein weiterer Vorteil des Verlängerungselementes 9 besteht darin, dass sich die Montage der elektrischen Verschienung stark vereinfachen lässt, da, insbesondere bei einer geeigneten Länge des Verlängerungselementes 9, beispielsweise bei einem Stapel 13 aus zwei Verschienungsplatten 14 mindestens eine Verschienungsplatte 14 temporär in Position gehalten werden kann, bis die zugehörige Schraube 16 in das durchgehende Loch 15 des Stapels 13 eingeführt, in die Federsenkmutter eingedreht und schlussendlich festgezogen ist. Ein Haltevorrichtung oder zusätzliches Personal zum Halten der mindestens einen Verschienungsplatte 14 in ihrer Montageposition wird dadurch überflüssig.

Bezüglich den Ausführungsformen der Federsenkmutter nach Fig. 2a, Fig. 2b, Fig. 2c, Fig. 3a, Fig. 3b bzw. Fig. 3c kann das Loch 4 des Kantenelementes 1, das Loch 8 des Scheibenelementes 5 und das Loch 12 des Verlängerungselementes 9 jeweils ein Innengewinde aufweisen. Für den Fachmann ist aber jegliche andere Kombination denkbar, dass z.B. nur das Loch 8 des Scheibenelementes 5 oder nur das das Loch 12 des Verlängerungselementes 9 ein Innengewinde etc. aufweist.

Bezüglich den Ausführungsformen der Federsenkmutter nach Fig. 3a, Fig. 3b bzw. Fig. 3c bildet das Kantenelement 1 mit dem Verlängerungselement 9 vorzugsweise ein Stück. Ferner ist es bezüglich den Ausführungsformen der Federsenkmutter nach Fig. 2a, Fig. 2b, Fig. 2c, Fig. 3a, Fig. 3b bzw. Fig. 3c auch denkbar, dass das Kantenelement 1 mit dem Scheibenelement 5 ein Stück bildet, wobei es aber bezüglich den Ausführungsformen der Federsenkmutter nach Fig. 3a, Fig. 3b bzw. Fig. 3c auch möglich wäre, dass das Kantenelement 1 mit dem Scheibenelement 5 und mit dem Verlängerungselement 9 ein Stück bildet. Durch die Einstückigkeit ergibt sich eine verbesserte Festigkeit der Federsenkmutter und eine vereinfachte Fertigung der Federsenkmutter, beispielsweise durch Giessen und/oder Schmieden.

In Fig. 4a ist eine erste Ausführungsform der Verschienungsplatte 14 der erfindungsgemässen elektrischen Verschienung in einer Aufsicht dargestellt. Desweiteren zeigt Fig. 5a eine zweite Ausführungsform der Verschienungsplatte 14 der erfindungsgemässen elektrischen Verschienung in einer Aufsicht. Allgemein weist das in Fig. 4a und Fig. 5a beispielhaft gezeigte Loch der Verschienungsplatte 14 und damit das durchgehende Loch 15 des Stapels 13 der Verschienungsplatten 14 eine Lochwandfläche 18 mit mindestens zwei ebenen Flächenteilen auf. Es versteht sich, dass die Lochwandfläche 18 des durchgehenden Loches 15 des Stapels 13 neben den mindestens zwei ebenen Flächenteilen ansonsten allgemein jedwede Form, d.h. zusätzliche Flächenteile jeglicher Form aufweisen kann. Damit die Federsenkmutter im montierten Zustand der erfindungsgemässen elektrischen Verschienung vorteilhaft gegen Lösen gesichert ist, liegt das Kantenelement 1 vorzugsweise mit mindestens zwei Seitenflächen 17 des Kantenelementes 1 an der Lochwandfläche 18 des mindestens einen durchgehenden Loches 15 des Stapels 14 an.

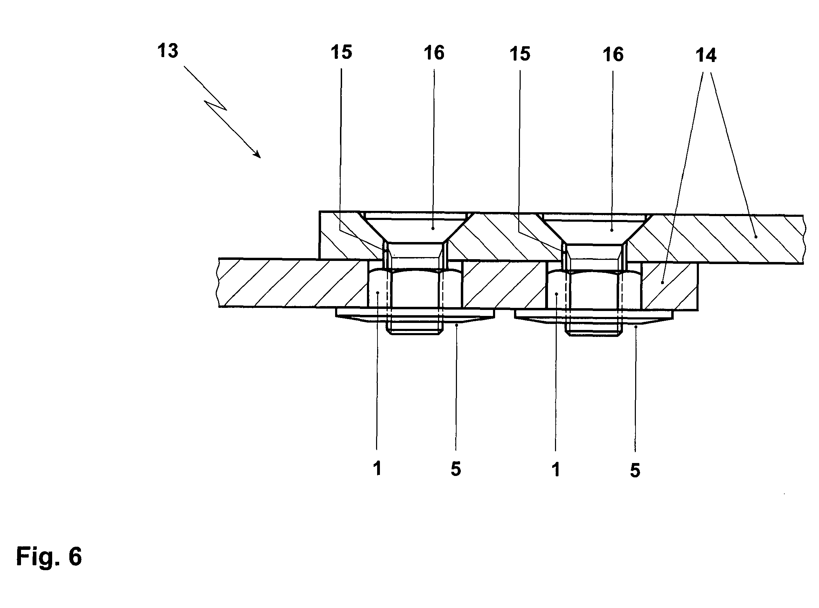

Zur Reduzierung der Bauhöhe der erfindungsgemässen elektrischen Verschienung und damit zur weiteren Platzeinsparung hat es sich als vorteilhaft erwiesen, dass die Schraube 16 als Senkschraube ausgebildet ist und damit mit ihrem Schraubenkopf in das durchgehende Loch 15 des Stapels 13 hineinragt und somit nicht oder nur unwesentlich über den Stapel 13 hinausragt. In Fig. 6 ist dazu beispielhaft eine dritte Ausführungsform der erfindungsgemässen elektrischen Verschienung mit einer solchen Senkschraube, insbesondere mit abgeschrägter Schraubenkopffläche, gezeigt. Es versteht sich, dass bei Verwendung einer solch gearteten Senkschraube Teile der Lochinnenfläche 18 des durchgehenden Loches 15 des Stapels 13 zur Aufnahme des Schraubenkopfes der Senkschraube ausgebildet sein sollten.

### Bezugszeichenliste

- 1: Kantenelement
- 2: erste Stirnseite des Kanteelementes
- 3: zweite Stirnseite des Kanteelementes
- 4: durchgehendes Loch des Kantenelementes
- 5: Scheibenelement
- 6: erste Stirnseite des Scheibenelementes
- 7: zweite Stirnseite des Scheibenelementes
- 8: durchgehendes Loch des Scheibenelementes
- 9: Verlängerungselement
- 10: erste Stirnseite des Verlängerungselementes
- 11: zweite Stirnseite des Verlängerungselementes
- 12: durchgehendes Loch des Verlängerungselementes
- 13: Stapel aus Verschienungsplatten
- 14: Verschienungsplatten
- 15: durchgehendes Loch des Stapels
- 16: Schraube
- 17: Seitenfläche des Kantenelementes
- 18: Lochwandfläche des durchgehenden Loches des Stapels

## Patentansprüche

1. Federsenkmutter mit einem zylinderförmigen und mit polygonalem Querschnitt ausgebildeten Kantenelement (1), welches ein von einer ersten Stirnseite (2) des Kantenelementes (1) zu einer zweiten Stirnseite (3) des Kantenelementes (1) verlaufendes durchgehendes Loch (4) aufweist,
**dadurch gekennzeichnet,**
**dass** ein Scheibenelement (5) vorgesehen ist, welches mit einer ersten Stirnseite (6) an der ersten Stirnseite (2) des Kantenelementes (1) angeordnet ist, und
**dass** das Scheibenelement 5() an der ersten Stirnseite (1) des Kantenelementes () übersteht.

2. Federsenkmutter nach Anspruch 1, **dadurch gekennzeichnet, dass** der bezüglich der ersten Stirnseite (2) des Kantenelementes (1) überstehende Teil des Scheibenelementes (5) in Richtung des Kantenelementes (1) gebogen ist.

3. Federsenkmutter nach einem der Ansprüche 1 oder 2, **dadurch gekennzeichnet, dass** das Scheibenelement (5) ein von der ersten Stirnseite (6) des Scheibenelementes (5) zu einer zweiten Stirnseite (7) des Scheibenelementes (5) verlaufendes durchgehendes Loch (8) aufweist, wobei das Loch (8) des Scheibenelementes (5) fluchtend zu dem Loch (4) des Kantenelementes (1) angeordnet.

4. Federsenkmutter nach einem der Ansprüche 1 bis 3, **dadurch gekennzeichnet, dass** ein zylinderförmiges und mit kreisförmigem Querschnitt ausgebildetes Verlängerungselement (9) vorgesehen ist, welches mit einer ersten Stirnseite (10) an der zweiten Stirnseite (3) des Kantenelementes (1) angeordnet ist, wobei der kreisförmige Querschnitt des Verlängerungselementes (9) dem polygonalen Querschnitt des Kantenelementes (1) einbeschrieben ist, und
dass das Verlängerungselement (9) ein von der ersten Stirnseite (10) des Verlängerungselementes (9) zu einer zweiten Stirnseite (11) des Verlängerungselementes (9) verlaufendes durchgehendes Loch (12) aufweist, wobei das Loch (12) des Verlängerungselementes (9) fluchtend zu dem Loch (4) des Kantenelementes (1) angeordnet.

5. Federsenkmutter nach Anspruch 4, **dadurch gekennzeichnet, dass** das Loch (12) des Verlängerungselementes (9) ein Innengewinde aufweist.

6. Federsenkmutter nach einem der Ansprüche 1 bis 5, **dadurch gekennzeichnet, dass** das Loch (4) des Kantenelementes (1) ein Innengewinde aufweist.

7. Federsenkmutter nach einem der Ansprüche 1 bis 6, **dadurch gekennzeichnet, dass** das Loch (8) des Scheibenelementes (5) ein Innengewinde aufweist.

8. Federsenkmutter nach einem der Ansprüche 4 oder 5, **dadurch gekennzeichnet, dass** das Kantenelement (1) mit dem Verlängerungselement (9) ein Stück bildet.

9. Federsenkmutter nach einem der Ansprüche 1 bis 8, **dadurch gekennzeichnet, dass** das Kantenelement (1) mit dem Scheibenelement (5) ein Stück bildet.

10. Federsenkmutter nach einem der Ansprüche 1 bis 9, **dadurch gekennzeichnet, dass** der polygonale Querschnitt des Kantenelementes (1) mindestens drei Ecken aufweist.

11. Elektrische Verschienung mit einem Stapel (13) aus mindestens zwei sich zumindest teilweise überdeckenden Verschienungsplatten (14), wobei der Stapel (13) mindestens ein in Stapelrichtung verlaufendes durchgehendes Loch (15) aufweist und durch das mindestens eine durchgehende Loch (15) des Stapels (13) eine Schraube (16) geführt ist,
**dadurch gekennzeichnet,**
**dass** das Schraubenende der Schraube (16) zur Verspannung des Stapels in eine Federsenkmutter nach einem der Ansprüche 1 bis 10 eingedreht ist, wobei das Kantenelement (1) in das durchgehende Loch (15) des Stapels (13) hineinragt.

12. Elektrische Verschienung nach Anspruch 11, **dadurch gekennzeichnet, dass** das Kantenelement (1) mit mindestens zwei Seitenflächen (17) des Kantenelementes (1) an der Lochwandfläche (18) des mindestens einen durchgehenden Loches (15) des Stapels (14) anliegt.

13. Elektrische Verschienung nach einem der Ansprüche 11 oder 12, **dadurch gekennzeichnet, dass** die Schraube (16) als Senkschraube ausgebildet ist.
